# FASCICULE DE BREVET EUROPEEN

(11) **EP 4 025 477 B1**
(45) Date de publication et mention de la délivrance du brevet: **26.07.2023**
(21) Numéro de dépôt: 20775033.2
(22) Date de dépôt: 11.08.2020
(51) Int. Cl.: B62D 25/18, B62D 27/06, B62D 65/16

(54) **ENSEMBLE DE DEFLECTEUR PARE-BOUE AYANT UN ELEMENT D'OBSTRUCTION D'UN ORIFICE DE PASSAGE, POUR VEHICULE**
KOTFLÜGELDEFLEKTORANORDNUNG MIT EINEM ELEMENT ZUM BLOCKIEREN EINER ÖFFNUNG FÜR EIN FAHRZEUG
MUDGUARD DEFLECTOR ASSEMBLY HAVING AN ELEMENT FOR OBSTRUCTING AN ORIFICE, FOR A VEHICLE

(30) Priorité: 04.09.2019 FR 1909721
(43) Date de publication de la demande: 13.07.2022
(73) Titulaire: PSA Automobiles SA, 78300 Poissy (FR)
(72) Inventeur: TERRIE, Olivier, 25200 GRAND CHARMONT (FR); FRABOULET, Samuel, 90160 BESSONCOURT (FR); MATHON, Raphael, 39700 COURTEFONTAINE (FR); CHESNAIS, Baptiste, 53170 Meslay du Maine (FR); GIGON, Philippe, 25150 ECOT (FR)
(86) Numéro de dépôt international: PCT/FR2020/051457
(87) Numéro de publication internationale: WO 2021/044089

(56) Documents cités:
- FR-A1- 2 878 810
- US-A- 4 408 939
- US-A1- 2019 078 596

## Description

### DOMAINE TECHNIQUE DE L'INVENTION

La présente invention revendique la priorité de la demande française 1909721 déposée le 04 Septembre 2019.

La présente invention se rapporte au domaine des véhicules, notamment des véhicules automobiles, et vise un ensemble de déflecteur pare-boue pour véhicule comprenant un élément d'obstruction d'une ouverture de passage présente sur le pare-boue.

### ETAT DE LA TECHNIQUE

Comme cela est connu, les véhicules de transport terrestre, en particulier les véhicules automobiles, comprennent des ensembles de déflecteurs pare-boue visant à protéger certaines parties des véhicules contre des projections d'eau, de boue ou de poussière notamment. En particulier, un ensemble de déflecteur pare-boue est prévu pour protéger le groupe motopropulseur d'un véhicule contre de telles projections. Des ensembles de déflecteur pare-boue sont également installés en aval des roues, fixés à la caisse, pour éviter des projections au niveau de la zone de la roue, notamment pour épargner les dispositifs de freinage.

Le document US2019/078596 décrit un ensemble de déflecteur de pare-boue de véhicule comprenant un parechocs et un pare-boue, le pare-boue présentant un orifice de passage d'un élément de fixation pour fixer le parechocs et le pare-boue ensemble.

Différents modèles de déflecteurs pare-boue existent. Toutefois, comme cela est connu, dans le domaine de la construction de véhicules automobiles notamment, pour chaque dispositif, notamment accessoire, il est préféré de minimiser le nombre de références de façon à réduire les coûts de production. Ainsi, des ensembles de déflecteurs pare-boue génériques sont mis au point et destinés à équiper différents modèles de véhicules, en particulier présentant différents types de groupes motopropulseurs (thermique, électrique, hybride) associés à différents types de réservoirs de carburant et autres tubulures correspondants.

Ainsi, des ensembles de déflecteur pare-boue génériques sont installés sur des véhicules de différentes manières. En particulier, un ensemble de déflecteur pare-boue comprend un déflecteur et un pare-boue. Le déflecteur est fixé au pare-boue. Sur un premier modèle de véhicule, le déflecteur est fixé au pare-boue au moyen d'une vis de fixation engagée dans un orifice de passage prévue dans le déflecteur, en vis-à-vis d'un orifice de passage correspondant du pare-boue. Sur un second modèle de véhicule, le même ensemble de déflecteur pare-boue est monté d'une autre manière ; notamment, le déflecteur n'est pas vissé au pare-boue, du moins pas en engageant une vis de fixation dans le même orifice de passage. Or, par habitude, certains opérateurs peuvent, alors qu'il s'agit du second modèle de véhicule, engager une vis de fixation dans ledit orifice de passage. Le problème qui en découle réside dans le fait que cette vis de fixation peut endommager des éléments situés à l'arrière de l'ensemble de déflecteur pare-boue.

En effet, par exemple, un réservoir de carburant ou une tubulure peut être disposé immédiatement à l'arrière de l'ensemble de déflecteur pare-boue, dans le second modèle de véhicule, justifiant qu'aucune vis de fixation ne soit engagée dans ledit orifice de fixation pour la fixation du pare-boue sur le déflecteur. L'engament intempestif d'une telle vis de fixation peut entraîner le perçage d'un réservoir ou d'une tubulure placé derrière.

Il existe donc un besoin pour un ensemble de déflecteur pare-boue comprenant un moyen d'interdiction de l'engagement d'une vis de fixation dans l'orifice de passage du pare-boue de l'ensemble de déflecteur pare-boue, lorsqu'un tel engagement n'est pas souhaité.

### PRESENTATION DE L'INVENTION

A cet effet, l'invention a pour objet un ensemble de déflecteur pare-boue pour véhicule, ledit ensemble comprenant un déflecteur et un pare-boue présentant un orifice de passage adapté pour le passage d'un élément de fixation, tel qu'une vis de fixation, et ledit déflecteur présentant un moyen de retenue, l'ensemble de déflecteur comprenant par ailleurs un élément d'obstruction, rapporté, configuré pour s'attacher par effet pince audit déflecteur, ledit élément d'obstruction comprenant une première et une deuxième surfaces d'appui parallèles adaptées pour prendre en sandwich une paroi du déflecteur, la première surface d'appui présentant un moyen de retenue complémentaire adapté pour coopérer avec le moyen de retenue du déflecteur pour assurer le guidage et le maintien en position dudit élément d'obstruction sur le déflecteur, l'une desdites première et deuxième surfaces d'appui présentant une portion d'obstruction configurée pour obstruer, en le recouvrant, l'orifice de passage du pare-boue de façon à empêcher le passage d'un élément de fixation.

Grâce à l'invention, on évite le vissage intempestif d'un élément de fixation dans l'orifice de passage, ce qui risquerait d'endommager, notamment de percer, un élément disposé à l'arrière de l'ensemble de déflecteur pare-boue, comme un réservoir ou une tubulure par exemple.

Avantageusement, le moyen de retenue est une ouverture de retenue aménagée dans la masse du déflecteur et le moyen de retenue complémentaire comprend au moins une ailette adaptée pour coopérer avec l'ouverture de retenue de façon à assurer le guidage et le maintien en position de l'élément d'obstruction.

Avantageusement, l'élément d'obstruction comprend une portion d'obstruction plane de l'une desdites première et deuxième surfaces d'appui, configurée pour obstruer en totalité l'orifice de passage du pare-boue, en opposition vis-à-vis de tout élément de fixation susceptible d'être engagé au travers de dudit orifice de passage.

Avantageusement, le pare-boue comprend un second moyen de retenue complémentaire destiné à coopérer avec le moyen de retenue et le moyen de retenue complémentaire pour assurer le maintien de l'ensemble de déflecteur pare-boue.

Avantageusement, le moyen de retenue du déflecteur est une ouverture de retenue, le moyen de retenue complémentaire de l'élément d'obstruction est une ouverture à ailettes et le second moyen de retenue complémentaire du pare-boue est un ergot, configurés de sorte que les ailettes de retenue des moyens de retenue complémentaires s'engagent dans l'ouverture de retenue et l'ergot s'engage et traverse à la fois l'ouverture à ailettes de retenue et l'ouverture de retenue pour assurer le maintien de l'ensemble de déflecteur pare-boue.

Avantageusement, la paroi du déflecteur ayant une épaisseur, l'élément d'obstruction peut présenter une forme de plaque repliée sur elle-même de façon à avoir les première et deuxième surfaces d'appui parallèles, avec un rayon de courbure sensiblement égal à la moitié de l'épaisseur de la paroi du déflecteur.

Par exemple, l'élément d'obstruction est en métal.

La présente invention vise aussi un véhicule automobile comprenant un ensemble de déflecteur pare-boue selon l'une des revendications précédentes.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
[Fig. 1] : la figure 1 est une représentation schématique d'un exemple d'élément d'obstruction pour un ensemble de déflecteur pare-boue selon l'invention ;
[Fig. 2] : la figure 2 est une représentation schématique d'un exemple d'ensemble de déflecteur pare-boue selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

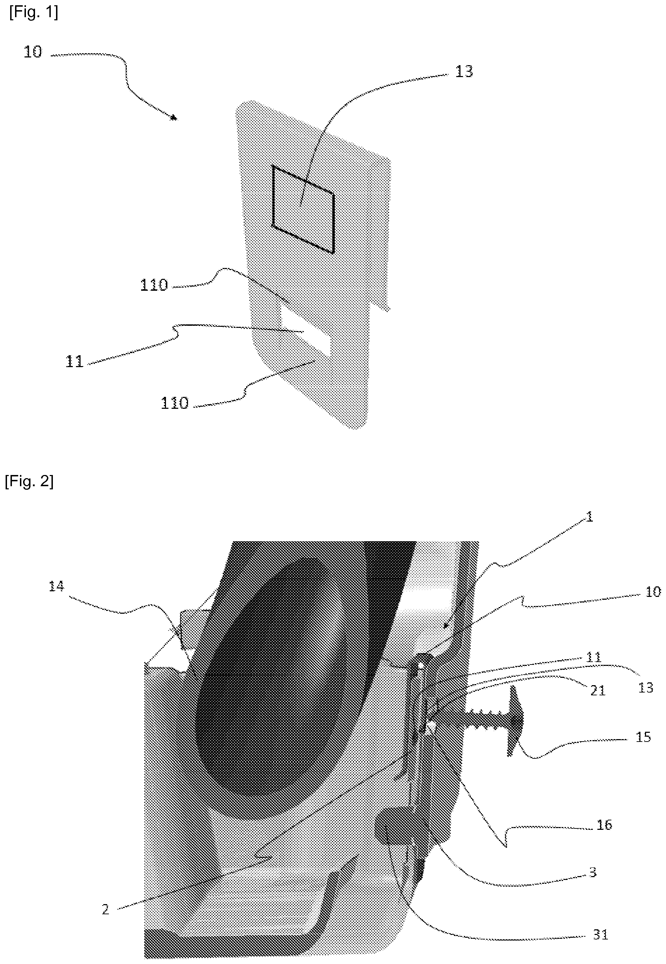

En référence aux figures 1 et 2, la présente invention concerne un ensemble de déflecteur pare-boue 1 pour véhicule (représenté sur la figure 2) comprenant un élément d'obstruction 10 (représenté sur la figure 1).

En référence à la figure 1, l'élément d'obstruction 10 est un élément rapporté sur le déflecteur 2, y étant attaché par effet pince comme cela est montré sur la figure 2. L'élément d'obstruction 10 est par exemple en métal. Il est intégré à l'ensemble de déflecteur pare-boue selon l'invention dans le cas où il ne faut pas engager d'élément de fixation tel qu'une vis de fixation 15 dans l'orifice de passage 16 prévu sur le pare-boue 3.

Toujours en référence à la figure 1, l'élément d'obstruction 10 comprend un moyen de retenue 11 complémentaire d'un moyen de retenue 21 prévu sur le déflecteur 2. Notamment, lesdits moyen de retenue 21 et de retenue complémentaire 11 peuvent être des formes complémentaires de type creux, ouvertures, ergots, aménagées dans la masse dudit élément d'obstruction 10 et dudit déflecteur 2. Ledit moyen de retenue 21 et de retenue complémentaire 11 assurent notamment le guidage de l'élément d'obstruction 10 lors de son insertion sur le déflecteur 2.

L'élément d'obstruction 10 représenté se présente sous la forme d'une plaque repliée sur elle-même avec un rayon de courbure sensiblement égal à la moitié de l'épaisseur de la paroi du déflecteur 2 auquel il se fixe.

Ainsi, l'élément d'obstruction 10 présente une première et une deuxième surfaces d'appui parallèles prenant en sandwich ladite paroi du déflecteur 2 lors de l'engament dudit élément d'obstruction 10 sur ledit déflecteur 2. Par effet pince, l'élément d'obstruction 10 se maintient sur le déflecteur 2, son guidage et sa localisation étant assurés par la coopération entre le moyen de retenue 21 et le moyen de retenue complémentaire 11.

Le pare-boue 3 est prévu pour être fixé directement ou indirectement au déflecteur 2. Par exemple, le pare-boue 3 peut comprendre un second moyen de retenue complémentaires 31 coopérant avec le moyen de retenue 21 du déflecteur 2 et le moyen de retenue complémentaire 11 de l'élément d'obstruction 10 pour assurer le maintien en position de l'ensemble de déflecteur pare-boue 1. Par exemple, le déflecteur 2 comprend une ouverture de retenue 21, assurant la fonction de moyen de retenue, coopérant avec une ouverture munie d'ailettes de retenue 11 de l'élément d'obstruction 10, assurant la fonction de moyen de retenue complémentaire, et avec un ergot 31 du pare-boue 3, assurant la fonction de second moyen de retenue complémentaire, pour assurer la tenue de l'ensemble de déflecteur pare-boue 1 selon un exemple de l'invention. Dans ce cas, les ailettes de retenue 110 du moyen de retenue complémentaire 11 de l'élément d'obstruction 10 s'engagent dans l'ouverture de retenue 21 du déflecteur 2, et l'ergot 31 s'engage et traverse à la fois l'ouverture à ailettes de retenue 11 et l'ouverture de retenue 21 pour assurer le maintien de l'ensemble.

L'élément d'obstruction 10 est ainsi configuré pour se « clipper » sur le déflecteur 2 et pour assurer une fonction « anti-vissage » par obstruction, en s'opposant, via la portion d'obstruction plane 13 appartenant à l'une desdites première et une deuxième surfaces d'appui, à toute tentative d'insertion d'une vis de fixation 15 à travers l'orifice de passage 16. Autrement dit, l'élément d'obstruction 10 présente un moyen de retenue complémentaire 11 notamment apte à assurer le guidage et la retenue de l'élément d'obstruction 10 vis-à-vis du déflecteur 2 et à maintenir le pare-boue 3 en position, et une portion d'obstruction plane 13 venant en opposition à toute vis de fixation 15 qu'un opérateur tenterait d'engager dans l'orifice de passage 16. On évite ainsi tout risque de perçage de la tubulure 14.

Ainsi, un problème technique résidant dans le fait que, lors du montage de l'ensemble de déflecteur pare-boue, en l'absence de l'invention, l'opérateur effectue, par habitude, un vissage, et donc introduit une vis de fixation dans l'orifice de passage, y compris pour des modèles de véhicule pour lesquels ce n'est pas souhaité, est résolu. Ce problème est résolu grâce à la présente invention, en particulier en raison de la présence et de l'agencement de l'élément d'obstruction 10.

## Revendications

1. Ensemble (1) de déflecteur pare-boue pour véhicule, ledit ensemble (1) comprenant un déflecteur (2) et un pare-boue (3) présentant un orifice de passage (16) adapté pour le passage d'un élément de fixation, tel qu'une vis de fixation (15), et ledit déflecteur (2) présentant un moyen de retenue (21), **caractérisé en ce que** l'ensemble de déflecteur (1) comprend par ailleurs un élément d'obstruction (10), rapporté, configuré pour s'attacher par effet pince audit déflecteur (3), ledit élément d'obstruction (10) comprenant une première et une deuxième surfaces d'appui parallèles adaptées pour prendre en sandwich une paroi du déflecteur (2), la première surface d'appui présentant un moyen de retenue complémentaire adapté pour coopérer avec le moyen de retenue (21) du déflecteur (2) pour assurer le guidage et le maintien en position dudit élément d'obstruction (10) sur le déflecteur (2), l'une desdites première et deuxième surfaces d'appui présentant une portion d'obstruction (13) configurée pour obstruer, en le recouvrant, l'orifice de passage (16) du pare-boue (3) de façon à empêcher le passage d'un élément de fixation.

2. Ensemble (1) selon la revendication 1, dans lequel le moyen de retenue est une ouverture de retenue (21) aménagée dans la masse du déflecteur (2) et le moyen de retenue complémentaire comprend au moins une ailette (110) adaptée pour coopérer avec l'ouverture de retenue (21) de façon à assurer le guidage et le maintien en position de l'élément d'obstruction (10).

3. Ensemble (1) selon l'une des revendications 1 à 2, dans lequel l'élément d'obstruction (10) comprend une portion d'obstruction (13) plane de l'une desdites première et deuxième surfaces d'appui, configurée pour obstruer en totalité l'orifice de passage (16) du pare-boue (3), en opposition vis-à-vis de tout élément de fixation susceptible d'être engagé au travers de dudit orifice de passage (16).

4. Ensemble (1) selon l'une des revendications 1 à 3, dans lequel le pare-boue (3) comprend un second moyen de retenue complémentaire (31) destiné à coopérer avec le moyen de retenue (21) et le moyen de retenue complémentaire pour assurer le maintien de l'ensemble de déflecteur pare-boue (1).

5. Ensemble (1) selon la revendication 4, dans lequel le moyen de retenue du déflecteur (2) est une ouverture de retenue (21), le moyen de retenue complémentaire de l'élément d'obstruction (10) est une ouverture à ailettes (11) et le second moyen de retenue complémentaires du pare-boue (3) est un ergot (31), configurés de sorte que des ailettes de retenue (110) de l'ouverture à ailettes (11) s'engagent dans l'ouverture de retenue (21) et l'ergot (31) s'engage et traverse à la fois l'ouverture à ailettes (11) et l'ouverture de retenue (21) pour assurer le maintien de l'ensemble de déflecteur pare-boue (1).

6. Ensemble (1) selon l'une des revendications 1 à 5, la paroi du déflecteur (2) ayant une épaisseur, dans lequel l'élément d'obstruction (10) présente une forme de plaque repliée sur elle-même de façon à avoir les première et deuxième surfaces d'appui parallèles, avec un rayon de courbure sensiblement égal à la moitié de l'épaisseur de la paroi du déflecteur (2).

7. Ensemble selon l'une des revendications 1 à 6, dans lequel l'élément d'obstruction (10) est en métal.

8. Véhicule automobile comprenant un ensemble de déflecteur pare-boue (1) selon l'une des revendications précédentes.

## Patentansprüche

1. Kotflügelanordnung (1) für ein Fahrzeug, wobei die Anordnung (1) eine Ablenkeinrichtung (2) und eine Ablenkeinrichtung (3) mit einer Durchgangsöffnung (16) aufweist, die für den Durchgang eines Befestigungselements, wie einer Befestigungsschraube (15), geeignet ist, und wobei die Ablenkeinrichtung (2) ein Haltemittel (21) aufweist, **dadurch gekennzeichnet, dass** die Ablenkeinrichtung (1) ferner ein angebrachtes Sperrelement (10) aufweist, das so konfiguriert ist, dass es durch Klemmen an der Ablenkeinrichtung (3), dem Sperrelement (1), befestigt ist 0) mit einer ersten und einer zweiten parallelen Auflagefläche, die so ausgebildet sind, dass sie eine Wand des Deflektors (2) sandwichartig einschließen, wobei die erste Auflagefläche ein komplementäres Rückhaltemittel aufweist, das so ausgebildet ist, dass es mit dem Rückhaltemittel (21) des Deflektors (2) zusammenwirkt, um die Führung und die Positionierung des Verschlussglieds (10) auf dem Deflektor (2) sicherzustellen, wobei eine der ersten und zweiten Auflageflächen einen Verschlussabschnitt (13) aufweist, der so ausgebildet ist, dass er die Durchgangsöffnung (16) der Schmutzscheibe (3) bedeckt ein Durchdringen eines Befestigungselements zu verhindern.

2. Anordnung (1) nach Anspruch 1, bei der die Halteeinrichtung eine Halteöffnung (21) ist, die in der Masse der Ablenkeinrichtung (2) vorgesehen ist, und die komplementäre Halteeinrichtung wenigstens eine Rippe (110) aufweist, die so ausgebildet ist, dass sie mit der Halteöffnung (21) zusammenwirkt, um die Führung und das Halten des Sperrelements (10) in seiner Position zu gewährleisten.

3. Anordnung (1) nach einem der Ansprüche 1 bis 2, bei der das Verschlussglied (10) einen ebenen Verschlussabschnitt (13) einer der ersten und zweiten Auflageflächen aufweist, der so konfiguriert ist, dass er die Durchgangsöffnung (16) der Kotflügel (3) gegenüber jedem Befestigungselement, das durch die Durchgangsöffnung (16) in Eingriff bringbar ist, vollständig verschließt.

4. Anordnung (1) nach einem der Ansprüche 1 bis 3, bei der die Kotflügelanordnung (3) ein zweites komplementäres Rückhaltemittel (31) zum Zusammenwirken mit dem Rückhaltemittel (21) und dem komplementären Rückhaltemittel aufweist, um das Halten der Kotflügelanordnung (1) sicherzustellen.

5. Anordnung (1) nach Anspruch 4, bei der die Ablenkerhalteeinrichtung (2) eine Halteöffnung (21) ist, die komplementäre Halteeinrichtung des Sperrelements (10) eine Rippenöffnung (11) ist und die zweite komplementäre Halteeinrichtung der Kotflügel (3) eine Nase (31) ist, die so konfiguriert ist, dass Halteschaufeln (110) der Rippenöffnung (11) in die Halteöffnung (21) eingreifen und die Nase (31) sowohl in Eingriff als auch durch sie hindurchtreten die Flügelöffnung (11) und die Rückhalteöffnung (21), um die Schmutzabweiseranordnung (1) zu halten.

6. Anordnung (1) nach einem der Ansprüche 1 bis 5, wobei die Wand der Ablenkeinrichtung (2) eine Dicke aufweist, wobei das Verschlussglied (10) eine Plattenform aufweist, die auf sich selbst gefaltet ist, sodass die erste und die zweite parallele Auflagefläche mit einem Krümmungsradius im Wesentlichen gleich der Hälfte der Wandstärke der Ablenkeinrichtung (2) vorhanden sind.

7. Anordnung nach einem der Ansprüche 1 bis 6, bei der das Verschlussglied (10) aus Metall besteht.

8. Kraftfahrzeug mit einer Schlammschutzabweiseranordnung (1) nach einem der vorhergehenden Ansprüche.

## Claims

1. A mudguard assembly (1) for a vehicle, said assembly (1) comprising a deflector (2) and a mudguard (3) having a passage opening (16) adapted for the passage of a fastening element, such as a fastening screw (15), and said deflector (2) having a retaining means (21), **characterized in that** the deflector assembly (1) further comprises an added obstruction element (10) configured to be clipped to said deflector (3), said obstruction element (10) comprising first and second parallel bearing surfaces adapted to sandwich a wall of the deflector (2), the first bearing surface having complementary retaining means adapted to cooperate with the retaining means (21) of the deflector (2) to guide and hold in position said blocking element (10) on the deflector (2), one of said first and second bearing surfaces having a blocking portion (13) configured to block, by covering it, the passage orifice (16) of the mudguard (3) so as to prevent the passage of a fixing element.

2. Assembly (1) according to claim 1, in which the retaining means is a retaining opening (21) arranged in the mass of the deflector (2) and the complementary retaining means comprises at least one fin (110) adapted to cooperate with the retaining opening (21) so as to ensure the guiding and the holding in position of the obstruction element (10).

3. Assembly (1) according to one of Claims 1 to 2, in which the obstruction element (10) comprises a flat obstruction portion (13) of one of the said first and second bearing surfaces, configured to completely obstruct the passage orifice (16) of the mudguard (3), in opposition to any fixing element capable of being engaged through the said passage orifice (16).

4. Assembly (1) according to one of Claims 1 to 3, in which the mudguard (3) comprises a second complementary retaining means (31) intended to cooperate with the retaining means (21) and the complementary retaining means to ensure the retention of the mudguard deflector assembly (1).

5. Assembly (1) according to claim 4, in which the means for retaining the deflector (2) is a retaining opening (21), the complementary retaining means of the obstruction element (10) is a fin opening (11) and the second complementary retaining means of the mudguard (3) is a lug (31), configured so that retaining fins (110) of the fin opening (11) engage in the retaining opening (21) and the lug (31) engages and passes through both the opening with fins (11) and the retaining opening (21) to hold the mudguard deflector assembly (1).

6. Assembly (1) according to one of Claims 1 to 5, the wall of the deflector (2) having a thickness, in which the obstruction element (10) has the shape of a plate bent back on itself so as to have the first and second bearing surfaces parallel, with a radius of curvature substantially equal to half the thickness of the wall of the deflector (2).

7. Assembly according to one of Claims 1 to 6, in which the obstruction element (10) is made of metal.

8. Motor vehicle comprising a mudguard deflector assembly (1) according to one of the preceding claims.
